# Europäisches Patentamt

# European Patent Office

# Office européen des brevets

(19)

(11) Veröffentlichungsnummer: **0 139 084**
**B1**

(12) **EUROPÄISCHE PATENTSCHRIFT**

(45) Veröffentlichungstag der Patentschrift:
**31.05.89**

(21) Anmeldenummer: **84106677.2**

(22) Anmeldetag: **12.06.84**

(51) Int. Cl.⁴: **C 08 L 67/02 //**
**(C08L67/02, 51:04)**

(54) **Verfahren zur Herstellung von kerbschlagzähen Formmassen auf Basis von Poly(alkylenterephthalaten).**

(30) Priorität: **08.08.83 DE 3328568**

(43) Veröffentlichungstag der Anmeldung:
**02.05.85 Patentblatt 85/18**

(45) Bekanntmachung des Hinweises auf die Patenterteilung:
**31.05.89 Patentblatt 89/22**

(84) Benannte Vertragsstaaten:
**CH DE FR GB IT LI NL**

(56) Entgegenhaltungen:
**FR-A-2 098 316**

(73) Patentinhaber: **HÜLS AKTIENGESELLSCHAFT,**
**Patentabteilung / PB 15 - Postfach 13 20, D-4370**
**Marl 1 (DE)**

(72) Erfinder: **Horlbeck, Gernot, Dr., In der Thiebrei 80,**
**D-4358 Haltern (DE)**
Erfinder: **Bittscheidt, Josef, Schillerstrasse 70,**
**D-4370 Marl (DE)**

EP 0 139 084 B1

**EP 0 139 084 B1**

## Beschreibung

Gegenstand der Erfindung ist ein Verfahren zur Herstellung von kerbschlagzähen Formmassen erhalten durch thermische Behandlung von Kunststoffmischungen, die überwiegend Poly(alkylenterephthalat) enthalten, in fester Form - sowie die so erhaltenen Formmassen als solche.

Poly(alkylenterephthalate) sind wertvolle Konstruktionswerkstoffe mit einer Reihe ausgezeichneter Eigenschaften wie hoher Steifigkeit, Oberflächenhärte, Abriebfestigkeit, guter Wärmeformbeständigkeit, Dimensionsstabilität und schneller Verarbeitbarkeit zu komplizierten und großen Formteilen.

Für manche Anwendungsbereiche ist jedoch die Kerbschlagzähigkeit der Poly(alkylenterephthalate) insbesondere bei Temperaturen unterhalb von 20°C ungenügend, so daß die Notwendigkeit besteht, Poly(alkylenterephthalat)-Formmassen mit verbessertem Niveau der Kerbschlagzähigkeit zu entwickeln.

Es existieren bereits zahlreiche Vorschläge, die Kälteschlagzähigkeit von Poly(alkylenterephthalat)-Formmassen durch Einkondensation aliphatischer Dicarbonsäuren oder Diolgemische oder durch Abmischen mit anderen Polymeren wie modifizierten Elastomeren und Polyolefinen zu verbessern.

Allen beschriebenen Maßnahmen haftet jedoch der Mangel an, daß entweder die Zunahme der Kälteschlagzähigkeit nur geringfügig ist oder daß eine deutliche Verbesserung der Kälteschlagzähigkeit mit einer unerwünschten Verschlechterung anderer Eigenschaften, insbesondere der Steifigkeit und Wärmeformbeständigkeit, verbunden ist.

Eine Gruppe von Elastomeren, die zur Schlagzähmodifizierung von Poly(alkylenterephthalaten) vorgeschlagen wurde, besteht aus Alkylacrylat-Mehrstufenpfropfcopolymerisaten. So beschreiben US-PS-4 034 013 und DE-OS-2 726 256 die Verwendung von Mehrstufenpfropfcopolymeren aus einem elastomeren Grundpolymeren und einer Pfropfkomponente. Die Grundpolymeren leiten sich vorzugsweise von Butylacrylat ab, während als Pfropfkomponente Methacrylate, vorzugsweise Methylmethacrylate, verwendet werden.

DE-OS-3 012 333 beschreibt schlagzähe Zusammensetzungen aus Poly(alkylenterephthalaten) und Polyacrylat-Pfropfcopolymeren; die Abmischungen können zusätzlich durch Glasfasern verstärkt werden und/oder flammfest ausgerüstet sein.

Schlagzähe Spritzgießmassen aus Poly(alkylenterephthalaten), Acrylat-Mehrstufenpfropfcopolymeren, Polyetherester-Elastomeren und speziellen Stabilisatorkombinationen werden in EP-PSS-33 393 und 32 586 beschrieben.

Unbefriedigend bleibt jedoch nach wie vor die geringe kerbschlagverbessernde Wirkung der Polyacrylat-Zusätze in den Abmischungen mit Poly(alkylenterephthalaten), so daß hohe Anteile des Modifizierungsmittels erforderlich sind, um eine relativ geringfügige Anhebung des Kerbschlagniveaus zu erreichen. Infolge des hohen Elastomeranteils sind Steifigkeit und Wärmeformbeständigkeit der kerbschlagzäh eingestellten Polyesterformmassen deutlich verschlechtert.

Aufgabe der Erfindung war es, die geschilderten Nachteile des Standes der Technik zu beheben.

Es wurde nun ein Verfahren zur Herstellung verbesserter Formmassen gefunden, in dem eine Kunststoffmischung aus

A. 70 bis 95 Gew.-% Poly(alkylenterephthalat) und

B. 5 bis 30 Gew.-% eines an sich bekannten elastifizierenden Acrylat-Pfropfcopolymeren

bei Temperaturen 15 bis 60°C unterhalb des Schmelzpunktes der reinen Komponente A in einer Inertgasatmosphäre behandelt wird.

Weiterer Gegenstand der Erfindung sind die Formmassen, die nach dem oben geschilderten Verfahren erhalten werden.

Als Poly(alkylenterephthalate) für die Komponente A kommen Poly(ethylenterephthalat), Poly(propylenterephthalat) und vorzugsweise Poly(butylenterephthalat) in Frage.

Bis zu 20 Mol-%, vorzugsweise 5 bis 15 Mol-%, der Terephthalsäure im Poly(alkylenterephthalat) können durch aliphatische, cycloaliphatische oder aromatische Dicarbonsäuren ersetzt werden. Beispiele geeigneter Dicarbonsäuren sind Isophthalsäure, Phthalsäure, Cyclohexan-1.4-dicarbonsäure, Adipinsäure, Sebazinsäure, Azelainsäure, Decandicarbonsäure o. ä.

Bis zu 20 Mol-5, vorzugsweise 5 bis 15 Mol-%, des jeweiligen Alkandiols im Poly(alkylenterephthalat) können durch andere Diole wie beispielsweise Ethylenglykol, Propandiol-(1.3), Hexandiol-(1.6), Neopentylglykol, 1.4-Dimethylolcyclohexan, Dodecandiol-(1.12) o. ä. ersetzt sein.

Das erfindungsgemäß verwendete Poly(alkylenterephthalat) wird in üblicher Weise durch Um- oder Veresterung und anschließende Polykondensation von Terephthalsäure oder deren polyesterbildenden Derivaten sowie dem entsprechenden Alkandiol in Gegenwart von Katalysatoren hergestellt (Sorensen und Campbell, Preparative Methods of Polymer Chemistry, Interscience Publishers Inc., N.Y., 1961, Seite 111 bis 127; Kunststoff-Handbuch, Band VIII, C. Hanser Verlag München, 1973, bzw. Journal of Polymer Science, Part A 1, 4, Seiten 1851 bis 1859, 1966).

Das Poly(alkylenterephthalat), welches erfindungsgemäß eingesetzt wird, besitzt eine Viskositätszahl (J) von 55 bis 100 cm$^3$/g, vorzugsweise von 65 bis 95 cm$^3$/g.

Als Komponente B werden in Bezug auf die Komponente A elastifizierend wirkende Acrylat-Pfropfcopolymere eingesetzt.

Als Grundpolymeres wird hierzu ein elastomeres Polyalkylacrylat eingesetzt, wobei die Alkylgruppe 1 bis 6 C-

2

Atome besitzen soll. Bevorzugtes Monomeres ist Butylacrylat, um ein Polymer mit einer möglichst tiefen Glastemperatur zu bilden.

Das Grundpolymere enthält etwa 0,1 bis 5 Gew.-% eines vernetzenden Monomeren. Geeignete Substanzen sind z. B. Mehrfachester aus Acryl- bzw. Methacrylsäure und Polyolen, bevorzugt eingesetzt wird Butylendiacrylat.

Ferner enthält das Grundpolymere in einer Menge von etwa 0,1 bis 5 Gew.-% Pfropfungshilfsmittel. Hierbei handelt es sich um Allylester ungesättigter Säuren wie Allylacrylat bzw. -methacrylat oder Diallylmaleinat. Besonders geeignet sind die Methylester. Bevorzugte Pfropfungshilfsmittel sind Allylmethacrylat und Diallylmaleinat.

Das Grundpolymere stellt 50 bis 95 Gew.-%, vorzugsweise 60 bis 90 Gew.-%, des Gesamtpolymeren der Komponente B dar.

Auf dieses Grundpolymere werden weitere Monomere pfropfcopolymerisiert. Kennzeichnend für diese Monomere ist, daß sie für sich allein polymerisiert harte, thermoplastische Produkte ergäben. Diese Monomeren können in mehreren Einzelschritten aufpolymerisiert werden. Es ist jedoch bevorzugt, diese Monomeren in einem einzigen Schritt aufzupolymerisieren.

Als bevorzugte Monomere werden Styrol, Acrylnitril und Alkylmethacrylate mit 1 bis 6 C-Atomen im Alkylrest eingesetzt.

Die hier grob beschriebenen Acrylat-Pfropfcopolymerisate werden in DE-OS-2 726 256 detailliert beschrieben.

So wird ein erfindungsgemäß bevorzugtes Pfropfcopolymerisat aus 60 bis 90 Gew.-% Butylacrylat, 0,1 bis 2,5 Gew.-% Butylendiacrylat, 0,1 bis 2,5 Gew.-% Alkylmethacrylat und der Rest zu Hundert aus Methylmethacrylat gebildet.

Die beschriebenen Acrylat-Pfropfcopolymere haben zu 5 bis 30 Gew.-%, vorzugsweise 10 bis 25 Gew.-%, Anteil an der Kunststoffmischung. Der Rest wird durch das Poly(alkylenterephthalat) der Komponente A gebildet.

Zur Durchführung der thermischen Behandlung der Kunststoffmischungen werden die Komponenten A und B miteinander gemischt. Um bei der weiteren Bearbeitung Entmischungserscheinungen zu vermeiden, wird das Gemisch vorzugsweise aufgeschmolzen, homogenisiert und anschließend in die endgültige Bearbeitungsform gebracht, wie z. B. Pellets, Granulate, Pulver etc. Bevorzugt wird dieser Arbeitsgang in einem Extruder bei Temperaturen von ca. 260 bis 280°C durchgeführt. Jedoch kann auch jedes andere bekannte und für den genannten Zweck brauchbare Verfahren angewendet werden.

Die so hergestellte Kunststoffmischung wird etwa 2 bis 12 Stunden, vorzugsweise 4 bis 10 Stunden, bei einer Temperatur, die 15 bis 60°C, vorzugsweise 20 bis 50°C, unterhalb des Schmelzpunktes der jeweiligen reinen Komponente A liegt, in einer Inertgasatmosphäre und vorzugsweise unter Bewegen der Kunststoffmischung thermisch behandelt. Es kann sowohl bei Normaldruck als auch in einem leichten Vakuum gearbeitet werden. Die Behandlung kann z. B. in einem Taumeltrockner oder Wirbelschichtreaktor durchgeführt werden.

Als Inertgas kommt insbesondere Stickstoff in Frage. Es können aber auch andere Inertgase eingesetzt werden. Es hat sich als vorteilhaft erwiesen, wenn in einem leichten Inertgasstrom gearbeitet wird.

Übliche Zusatz- und Hilfsstoffe wie Pigmente, Verarbeitungsmittel, Füll- und Verstärkungsstoffe, Hydrolyse-, Thermo- oder UV-Stabilisatoren können sowohl während der Herstellung (Schmelzmischung) als auch in die fertigen, behandelten Formmassen eingearbeitet werden.

Das erfindungsgemäße Verfahren zeichnet sich gegenüber dem Stand der Technik dadurch aus, daß

a) Poly(alkylenterephthalat)-Formmassen schon durch wesentlich geringere Acrylat-Zusätze kerbschlagzäh eingestellt werden können und somit hohe Steifigkeit und Wärmeformbeständigkeit neben gutem Zähigkeitsniveau aufweisen, und

b) Poly(alkylenterephthalat)-Formmassen, die mit dem bisher zur Erzielung einer nur mäßigen Kerbschlagverbesserung notwendigen hohen Acrylatanteil modifiziert werden, jetzt eine ausgezeichnete Kerbschlagzähigkeit, insbesondere bei tieferer Temperatur, zeigen.

Der Lösungsweg ist vor allem deswegen für einen Fachmann überraschend, da sowohl die Festphasennachkondensation einer reinen Poly(alkylenterephthalat)-Formmasse als auch das einfache Abmischen derartiger Formmassen mit einer Vielzahl elastifizierend wirkender Polymeren nicht die beabsichtigten Ergebnisse erbracht haben. Ebenso unerwartet ist das erfindungsgemäße Ergebnis auch deswegen, weil die Abmischung aus einem der Festphasennachkondensation unterworfenen Polyester mit einem elastifizierenden Polymeren keine besondere Wirkung ergibt - eine deutliche Wirkung ergibt sich erst dann, wenn die Kunststoffmischung selbst den erfindungsgemäßen Bedingungen unterworfen wird.

Die in der Beschreibung und in den Beispielen aufgeführten Parameter wurden mittels der nachstehend genannten Meßmethoden bestimmt:

Die Viskositätszahl (J) des Poly(alkylenterephthalats) wurde an Lösungen von 0,23 g Polyester in 100 ml Phenol/sym-Tetrachlorethan (60/40 Gew.-Teile) bei 25°C gemessen.

Kerbschlagzähigkeit gemäß DIN 53 453

Grenzbiegespannung gemäß DIN 53 452

Zug-E-Modul gemäß DIN 53 457/2.1

Wärmeformbeständigkeit gemäß ISO/R 75 (Verfahren A und B)

3

Die mit Buchstaben gekennzeichneten Beispiele sind nicht erfindungsgemäß.

**Beispiele**

In einem 0,5 m³-Taumeltrockner werden 120 kg der Kunststoffmischung in Form von Granulat (Zusammensetzung s. Tabelle 1) unter den in Tabelle 1 angegebenen Bedingungen thermisch behandelt. Die charakteristischen Eigenschaften der Formmassen werden in Tabelle 2 und 3 wiedergegeben.

**Tabelle 1**

| Versuch | Kunststoffmeischung [Gew.-Teile] | Bedingungen de thermischen Behandlung | | |
|---------|----------------------------------|----------------|--------|----------|
| | | Temperatur [°C] | Zeit [h] | N₂-Strom [1/h] |
| 1 | 90 PBTP*) (J = 90 cm³/g) 10 Acrylat-Pfropfcopolymer I**) | 200 | 4 | 80 |
| 2 | 85 PBTP*) (J = 90 cm³/g) 15 Acrylat-Pfropfcopolymer I**) | 190 | 5 | 80 |
| 3 | 85 PBTP*) (J = 90 cm³/g) 15 Acrylat-Pfropfcopolymer II***) | 190 | 3 | 120 |
| A | 100 PBTP*) (J = 90 cm³/g) | 210 | 4 | 100 |
| B | 100 PBTP*) (J = 90 cm³/g) | 190 | 8 | 120 |
| C | 90 PBTP*) (J = 110 cm³/g) 10 Acrylat-Pfropfeopolymer I**) | - | - | - |
| D | 85 PBTP*) (J = 116 cm³/g) 15 Acrylat-Pfropfcopolymer II***) | - | - | - |

*) Poly(butylenterephthalat) - Viskositätszahl vor dem Einmischen

**) Zweistufen-Pfropfcopolymer aus 88 Gew.-Teilen Butylacrylat/12 Gew.-Teilen Methylmethacrylat

***) Zweistufen-Pfropfcopolymer aus 69 Gew.-Teilen Butylacrylat/31 Gew.-Teilen Methylmethacrylat

**Tabelle 2**

| Versuch | Zug-E-Modul [N/mm²] | Grenzbiegenspannung [N/mm²] | Wärmeformbeständikeit [°C] | |
|---------|---------------------|-----------------------------|------------|------------|
| | | | Verfahren A | Verfahren B |
| 1 | 2 200 | 83 | 66 | 160 |
| 2 | 2 050 | 78 | 64 | 155 |
| 3 | 2 100 | 81 | 68 | 158 |

**Tabelle 3**

| Versuch | Viskositätszahl (J)*) des PBTP-Anteils in der Kunststoffmischung [cm³/g] | | Kerbschlagzähigkeit [kJ/m²] | | |
|---------|---------|---------|---------|---------|---------|
| | vor | nach | vor | nach | |
| | der thermischen Behandlung | | der thermischen Behandlung | | |
| | | | 23°C | 23°C | -20°C |

| | | | | | |
|---|---|---|---|---|---|
| 1 | 88 | 105 | 14,1 | 41,7 | 11,2 |
| 2 | 86 | 110 | 20,9 | 53,9 | 11,7 |
| 3 | 87 | 108 | 11,3 | 35,1 | 9,8 |
| A | 90 | 105 | 3,5 | 3,7 | 3,5 |
| B | 90 | 112 | 3,5 | 3,8 | 3,5 |
| C | 106 | - **) | 17,6 | - **) | - |
| D | 110 | - **) | 13,5 | - **) | - |

*) gemessen an PBTP, welches aus der Kunststoffmischung extrahiert wurde

**) keine thermische Behandlung

## Patentansprüche

1. Verfahren zur Herstellung von kerbschlagzähen Formmassen erhalten durch thermische Behandlung von Kunststoffmischungen, die überwiegend Poly(alkylenterephthalat) mit einer Viskositätszahl (J) im Bereich von 55 bis 100 cm³/g enthalten, in fester Form,
dadurch gekennzeichnet,
daß die Kunststoffmischung
A. 70 bis 95 Gew.-% Poly(alkylenterephthalat) und
B. 5 bis 30 Gew.-% eines elastifizierenden Acrylat-Pfropfcopolymeren mit 1 bis 6 C-Atomen in der Alkylgruppe
enthält und daß die Kunststoffmischung bei Temperaturen 15 bis 60°C unterhalb des Schmelzpunktes der reinen Komponente A in einer Inertgasatmosphäre behandelt wird.
2. Kerbschlagzähe Formmassen hergestellt nach dem Verfahren gemäß Anspruch 1.

## Revendications

1. Procédé de préparation de masses à mouler résistant à l'entaillage au choc, par traitement thermique de mélanges de substances synthétiques renfermant principalement un polytéréphtalate d'alkylène d'un indice de viscosité (J) compris dans un domaine allant de 55 à 100 cm³, sous forme solide,
caractérisé par le fait que le mélange de substances synthétiques renferme
A. de 70 à 95 % en poids de téréphtalate de polyalkylène, et
B. de 5 a 30 % en poids d'un copolymère greffé d'acrylate exerçant un effet élastifiant et comportant de 1 à 6 atomes de carbone dans le groupe alkyle,
et que l'on traite le mélange de substances synthétiques, dans une atmosphère gazeuse inerte, à des températures inférieures de 15 à 60°C au point de fusion que le composant A présente à l'état pur.
2. Les masses à mouler qui résistent à l'entaillage au choc, qui sont préparées par la mise en oeuvre du procédé selon la revendication 1.

## Claims

1. A process for producing notch-impact-resistant moulding compositions by thermal treatment of plastics mixtures, which predominantly contain poly(alkylene terephthalate) having a viscosity number (J) in the region of 55 to 100 cm³/g, in solid form, characterised in that the plastics mixture comprises
A) 70 to 95 % by weight of poly(alkylene terephthalate) and
B) 5 to 30 % by weight of an elasticising acrylate graft copolymer having 1 to 6 carbon atoms in the alkyl group
and in that the plastics mixture is treated at temperatures 15 to 60°C below the melting point of the pure component A in an inert gas atmosphere.
2. Notch-impact-resistant moulding compositions produced by the process according to claim 1.